Europäisches Patentamt

**European Patent Office**

Office européen des brevets

(11) Publication number: **0 162 030**
A2

# EUROPEAN PATENT APPLICATION

(21) Application number: 85850174.5

(22) Date of filing: 17.05.85

(51) Int. Cl.⁴: **H 02 J 7/04**, H 02 J 7/10

(30) Priority: 17.05.84 SE 8402657
24.10.84 SE 8405314

(71) Applicant: **Nya Lövänger Elektronik AB, Fack,
S-930 10 Lövänger (SE)**

(43) Date of publication of application: 21.11.85
**Bulletin 85/47**

(72) Inventor: **Karlsson, Olov Göran Arvid, Selet 2091,
S-930 10 Lövanger (SE)**

(84) Designated Contracting States: **AT BE CH DE FR GB IT
LI NL SE**

(74) Representative: **Lindblom, Erik J., Caroline Östbergs
väg 5, S-122 35 Enskede (SE)**

(54) **A battery charging system.**

(57) Battery charging system comprises a charging unit (2) having a controllable power output, a control means (3) adapted to control the power output of the charging unit, and at least two batteries (4, 5) which receive the power output of the charging unit. The power output from the charging unit (2) is controlled (8') via the control means (3) for maximum, or at least near maximum power during the whole of the charging time. When an excessively high charge is established (15, 16) in the batteries (4, 5) the charging unit (2) is controlled (18, 22, 29) through the control means (3) in a manner to switch the charging unit to a batterycharge maintaining mode or to a level of charge adapted for final charging of the battery.

1                                                    0162030

TITLE OF INVENTION      A battery charging system

TECHNICAL FIELD

The present invention relates to a battery charging system, and in particular to battery charging systems of the kind which include battery charging unit having a controllable power output, a control means for controlling the power output of the charging unit, and at least two batteries or battery arrays which receive the power delivered by said charging unit.

The most distinctive features of a battery charging system according to the invention lie in the means which control the charge delivered by the charging unit. The charging unit and batteries may thus be of a kind known per se.

A battery charging device according to the invention can be used advantageously in direct current supply systems in which at least two batteries are used, either as separate current supply sources or as a combined single current supply source.

In certain applications it is normal to use a first battery to power a starting motor connected to a combustion engine, and to use a second battery to power other apparatus and devices, such as lighting, water pumps, refrigerators, and the like.

In watercraft, caravans and the like the energy required to power the subsidiary devices is taken expediently from a first battery, while a second, fully charged battery is connected to a combustion engine which in turn is connected to a battery charging unit (generator), such that when the first battery is discharged or flat, the second battery will start the combustion motor, therewith to re-charge the first battery, either partially or completely, through the

2 0162030

battery charging unit.

BACKGROUND ART

There are known to the art battery charging systems which comprise a charging unit having a control output, a control means for controlling the output of the charging unit, and at least two separate batteries which receive charging current from the charging unit. In one known system of this kind the charging unit is a controllable-output generator which is driven by a combustion engine and which may be either a D.C. generator or an A.C. generator with associated diodes, and the power output of which is controlled by controlling the power input to the magnetizing coil.

A prime desire in this respect is to maintain on full charge a first battery intended for operating the starting motor of a combustion engine and a second battery for supplying current to other power consuming apparatus.

Thus, in operation the output charge of the controllable charging unit or the generator shall first be fed to the first battery and sustained until the battery is fully charged, and then transferred to the second battery until this battery is charged.

It is known to use different diode coupling circuits and control circuits to distribute the charging current between the two batteries.

A common characteristic of known control circuits, and also the known control devices for controlling the current output of the charging unit, is that they do not utilize the potential power output to the full until both batteries are fully charged. Normally, the power output is stepped down in response to the level of charge on the batteries. This has been considered a natural occurrence, since the terminal voltage of the battery has a tendency to increase when the battery is fully charged, and this variation is allowed to directly control the power output.

DISCLOSURE OF THE INVENTION

TECHNICAL PROBLEM

It will be seen from this that as the art now stands with respect to the aforesaid electrical coupling arrangements there is exists a qualified technical problem in providing conditions whereby the power output of the controllable charging unit is constantly at a maximum, or at least at a near maximum, irrespective of the charge level of the batteries, coupled with the fact that the first battery shall be charged first while charging of the second battery takes place after the first.

Another qualified technical problem in this respect is one of providing means whereby maximum output can be taken from the charging unit until both batteries are fully charged and the current delivered by the unit then reduced to an adapted maintenance level or to a level adapted for charging the battery in the final stage of the battery charging process.

Another qualified technical problem is one of providing conditions which enable differential charging of the various batteries with the aid of simple means.

A further qualified technical problem is one of providing differential charging in which full charging power is delivered to the batteries and in which when the first battery is fully charged the full power output is transferred to the second battery for a given period of time and then switched back to the first battery, and in which the time during which a first battery receives full charging power is permitted to decrease in favour of the charging time of the other battery.

Another qualified technical problem is one of creating

0162030

conditions in which the terminal voltage occurring across the first battery can be established in a first terminal-voltage sensing circuit and utilized to determine the prevailing terminal voltage, and in which a further similar terminal-voltage sensing circuit can be used to sense the terminal voltage across the other battery, and in which these prevailing terminal voltages can be used, with the aid of simple means, to control the maximum power output of the charging unit to the first battery and/or to the second battery.

A further qualified technical problem is one of providing power output control means so constructed that while said means will constantly lead the charging unit to a maximum given power output, this maximum output becomes inhibited at such times as those when the second terminal-voltage sensing circuit detects a terminal voltage which exceeds a given value.

It must also be considered a qualified technical problem to provide with the aid of simple and inexpensive components a buffer circuit for the terminal-voltage sensing circuit of the first battery and a buffer circuit for the terminal-voltage sensing circuit of the second battery, and to enable each of the buffer circuit to be connected to a respective comparator unit controlled by an adjustable reference voltage, and to permit the first comparator unit to control a first transistor circuit for coupling the power output either to the first battery or to the second battery, and to permit the second comparator circuit to control a second transistor circuit which inhibits a signal delivered by a control circuit such that the second transistor circuit causes the charging unit to deliver a battery maintenance charge or a charge adapted for final charging of the battery.

0162030

With respect to the present technical standpoint as before-described a prime technical problem resides in the provision of a simple battery charging system which eliminates the pulsating of charging current between the two batteries associated with known battery charging systems to be eliminated.

A further technical problem is one of providing conditions which, when a battery charging system is to charge two batteries or battery arrays, will enable charging current to flow to both batteries simultaneously and whereby this distribution of charging current is effected so that a fully charged battery receives less current while a battery of lower charge receives a larger amount of current, i.e. a greater and smaller percentage of the total available power output.

A further technical problem related to systems of the aforementioned kind is one of providing switching means for the system components so constructed as to solve the aforementioned technical problems with the use of a small number of necessary components.

In the case when a first battery intended for operating a starting motor of a combustion engine, and a second battery intended for supplying current to other power consuming apparatus where the two batteries must be capable of being charged simultaneously with charging current adapted to the charge requirement of a respective battery, a further technical problem is one of providing a battery charging system in which the circuits determining the charge requirement of a respective battery can be constructed from simple components.

With respect to the aforegoing problems, a further related problem is one of enabling the first battery to be connected to an active switching circuit (a transistor circuit) while the other battery is connected to a passive diode array.

6

0162030

Another technical problem in this respect is to ensure in such a charge-requirement circuit incorporating an active transistor circuit and a passive diode array that the charging current or power output will initially pass through both transistor circuits and the diode circuit. A further technical problem related to such charge-requirement establishing circuits is one of enabling the transistor circuit to remain conductive throughout the time that the voltage drop across the transistor circuit is lower than the voltage drop across the diode array, which normally means that the terminal voltage across the first battery will never reach a pre-determined set terminal voltage until a corresponding increase in terminal voltage has taken place for the other battery.

A further technical problem is one of ensuring that when the terminal voltage across the first battery reaches a pre-determined value, the active switching circuit transistor will increase its forward voltage drop, thereby holding the set terminal voltage on the first battery constant.

Yet another technical problem is one of utilizing the fact that the forward voltage drop across the transistor will be the same as that across the diode array, including conductor losses, when a sensing circuit for sensing the terminal voltage on the second battery exhibits a pre-determined value.

SOLUTION

The present invention relates to a battery charging system comprising a charging unit having a controlable power output, a control means for controlling the power output of the charging unit, and at least two batteries which receive the power output of the charging unit.

In accordance with the invention, the power output of the charging unit is controlled by said control device for maximum, or at least near maximum power during the whole duration of the charging time, and that when a high level of charge is established in the batteries the control means switches the charging unit to a power output adapted for maintaining the battery charge or to an output level adapted for final charging of the batteries.

Conveniently a first supply conductor for feeding charging current to a first battery has an electrical resistance which exceeds the electrical resistance of a second supply conductor for feeding charging current to a second battery. This difference in resistance levels is preferably achieved with the aid of one or more diodes.

In accordance with the invention there is provided a first terminal-voltage sensing circuit which is adapted to detect the terminal voltage occurring across the terminals of a first battery, and a second terminal-voltage sensing circuit which is adapted to sense the terminal voltage occurring over the terminals of a second battery.

The control means includes a circuit arranged to constantly guide the charging unit to a maximum or a high power output, and the effect of said circuit on the control means is inhibited when sensed terminal voltages exceed pre-determined values for the two batteries, whereupon the charging unit is switched to a battery-charge maintaining mode or is disconnected.

8

0162030

In accordance with the invention there is provided a first transistor circuit adapted to control the power output to the first or the second battery.

The first terminal-voltage sensing circuit is conveniently coupled to a first comparator unit via a first buffer circuit, while the second terminal-voltage sensing circuit is coupled to a second comparator unit via a second buffer circuit. The first and second comparator units are both responsive to a reference voltage, preferably an adjustable reference voltage. The first comparator unit is adapted to control a first transistor circuit in a manner to supply maximum output power to the first or the second battery, while the second comparator unit is arranged to inhibit a maximum charge signal supplied from a control circuit and to cause reduction of the power output to a minimum.

The present invention relates to a battery charging system comprising a charging unit having a controllable power output, a control means effective to control the power output of the charging unit, and at least two batteries which receive the power output or charging current from the charging unit, in which a first battery is connected to a switching circuit and a second battery is connected to a diode array. The first battery is intended to deliver current to a starting motor while the second battery is intended for current supply of longer duration.

9

0162030

In the battery charging system according to the invention the switching circuit is adapted initially to take a position in which charging current is supplied to the first battery, adapted to supply starting current, and then to supply current to the second battery adapted for current supply of longer duration, and to choke the switching circuit when an elevated terminal voltage is registered on said first battery, whereupon current is supplied solely to the second battery, through the diode array.

In accordance with the invention a transistor incorporated in the switching circuit is initially fully conductive and produces thereby a voltage drop which is lower than the voltage drop across the diode array, which effects simultaneous charging of the two batteries.

The system according to the invention also incorporates a terminal-voltage sensing circuit adapted to detect a predetermined terminal-voltage value for the first battery, from which there is given an increased forward voltage drop for the transistor and which increase maintains a set terminal voltage for the first battery.

In accordance with the invention, the forward voltage drop across the transistor is permitted to increase until it is equal to the voltage drop across the diode array (including conductor losses), the charging current to the second battery being disconnected or switched to a battery-charge maintaining level.

0162030

ADVANTAGES

Those advantages primarily associated with a battery charging system according to the invention reside in the fact that means are provided which enable the controllable charging unit to be utilized to a maximum in a simple fashion during the time interval over which charging of the batteries takes place, and which as soon as the batteries are fully charged enable the power output to be switched down momentarily to a level adapted to maintain the charge on the battery or to a level adapted for final charging of the batteries. In addition, the control means by means of which the power output of the charging unit is controlled can be constructed with the aid of simple standard components, combined with a simple switching circuit which enables the control means to be manufactured at low cost.

The main characterizing features of a battery charging unit according to the present invention are set forth in the characterizing clauses of Claim 1. and 7. '

BRIEF DESCRIPTION OF THE DRAWINGS

An embodiment of the invention at present preferred and exhibiting the features characteristic of the present invention will now be described in more detail with reference to the accompanying drawing, in which

0162030

Figure 1 is a highly schematic illustration of a battery charging system, comprising a charging unit having a controllable power output, a control means for controlling the power output of the charging unit, and two batteries which receive the charging current delivered;

Figure 2 is a block schematic of a preferred embodiment of the charging unit control means, and

Figure 3 is a diagram illustrating in greater detail the components incorporated in the block schematic of Figure 2 and the mutual connection of these components.

Figure 4 illustrates in detail part of the switching arrangement applicable to a part of a control means for controlling the power output charge of the charging unit in accordance with the present invention.


## DESCRIPTION OF A PREFERRED EMBODIMENT

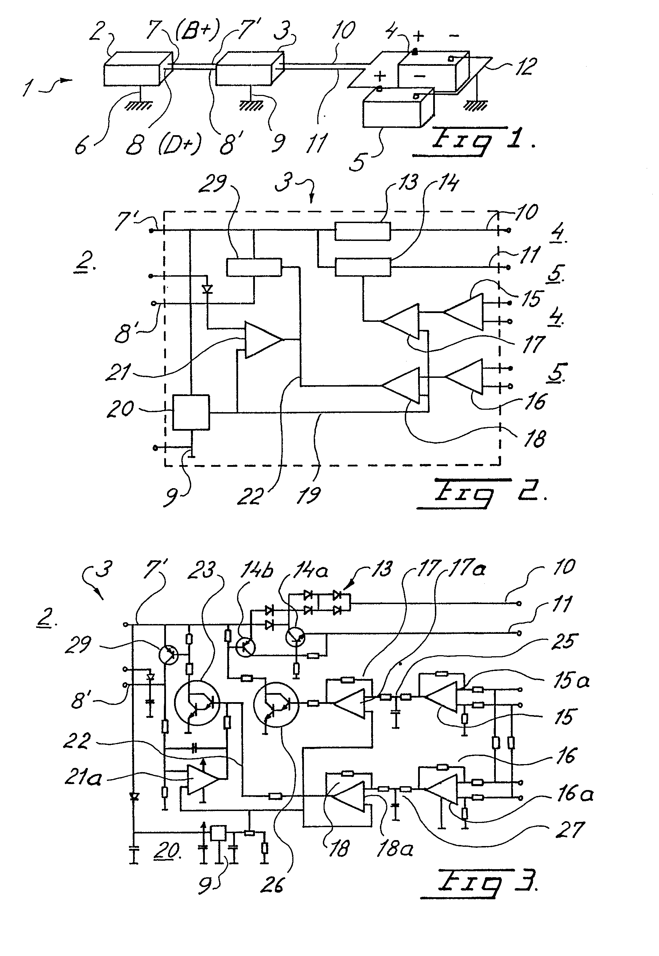

Figure 1 is a highly schematic view of a battery charging system 1 according to the invention. The system includes a charging unit 2 having a controllable power output. The charging unit may have the form of a D.C. generator or an A.C. generator with associated rectifiers driven by a combustion engine, the generator being earthed through a first connection 6 and connected to a conductor 7' for supplying positive voltage and a charging current via a second connection 7 (also referenced B+). Through a connection 8 and a conductor 8' (also referenced D+) connected to the connection 8 it is possible, via a control circuit not shown, to control the magnetizing coil in the generator 2 and thereby provide a controllable power output via the connection 7 and the conductor 7'. The charging unit 2 is connected to a control means 3 through a conductor 7' and a conductor 8', this control means being connected to earth potential through a conductor 9 and being adapted to control the power output of the charging unit.

Although the conductor 8' may be connected directly to the magnetizing winding it will be assumed in the following that the said conductor is connected to a control circuit (not shown) which in turn powers the magnetizing winding in the generator.

The control means 3 is connected to a first battery 4 through a conductor 10 and to a second battery 5 through a conductor 11.

In accordance with the present invention the control means 3 is constructed to supply full power output firstly to the first battery 4, through the conductor 10, and secondly to supply full power output to the second battery 5, and as soon as the battery 4 is fully charged to permit all charging current from the charging unit 2 to pass to the second battery 5 through the conductor 11.

Both batteries 4 and 5 are connected to earth through a conductor 12.

The block schematic of Figure 2 illustrates a control means 3 adapted to control the power output of the charging unit 2 and constructed in accordance with the invention. In the Figure 2 embodiment the conductor 7' is connected to a diode or a diode array 13 prior to being connected to the conductor 10 of the first battery 4. This conductor 7' can be connected to the conductor 11 for supplying charging current to the second battery 5 by means of a first transistor circuit 14.

The reference 15 identifies a first buffer circuit connected to the first battery 4 and adapted to sense the terminal voltage prevailing thereon at any moment in time. Similarly, a second buffer circuit 16 is arranged to sense the prevailing terminal voltage on the second battery 5. The first buffer circuit 15 is connected to a first comparator unit 17, while the second buffer circuit 16 is connected to a second comparator unit 18.

The comparator unit 17 and the comparator unit 18 are both connected, through a conductor 19, with a reference voltage generated in a circuit 20. This reference voltage is advantageously adjustable. The reference voltage is also connected to a control circuit 21.

The first comparator unit 15 is arranged to control a first transistor circuit 14 while the second comparator circuit 18 is arranged to control a second transistor circuit 29 via a conductor 22.

The second transistor circuit 29 is controlled by the circuit 20 generating the reference voltage and the control circuit 22 in a manner such that there occurs on the conductor 8' a voltage which, through the control circuit, causes full current to pass to the magnetizing winding, meaning that full output power occurs on the conductor 7'. As soon as a signal occurs on the output of the comparator circuit 18, through the conductor 22, the output signal from the control circuit 21 is inhibited and the transistor circuit 29 becomes fully conductive and therewith delivers on the conduit 8' a voltage which is understood by the control circuit to indicate an excessively high terminal voltage on the battery, and hence the control circuit will inhibit supply of current to the magnetizing winding, meaning that the power output on the conductor 7' will fall drastically to a battery-charge maintaining level or to a level adapted for final charging of the battery.

Figure 3 illustrates in more detail proposed coupling or switching components for executing the function according to the block schematic illustrated in Figure 2. It can thus be mentioned that the diode 13 comprises four diode units which are connected pairwise in series and pairwise in parallel and produce a voltage drop such that the first supply conductor 10 for supplying charging current to a first battery 4 has an electrical resistance which exceeds the electrical

0162030

resistance of the second supply conductor 11 through which charging current is supplied to the second battery 5. This difference in resistance serves to make conductive a transistor 14a incorporated in the first transistor circuit 14.

The transistor circuit 14 comprises two transistors 14a and 14b, where the one transistor 14b is arranged to control the transistor 14a, which serves the direct purpose of coupling the charging current or power output to the second battery 5.

A first terminal-voltage sensing circuit 15 adapted to establish the prevailing terminal voltage of the first battery 4 includes a first buffer circuit 15a. The terminal voltage of the battery 4 is applied to the inputs of an operation amplifier, the outputs of which are connected, via an RC-link 25, to a first comparator unit 17 incorporating an operational amplifier 17a. The output of the comparator circuit 17a controls a transistor switch 26 through which the voltage level from the comparator unit can be adjusted when switching shall take place, this transistor switch in turn controlling the transistors 14b and 14a.

A second terminal-voltage sensing circuit 16 adapted for establishing the prevailing terminal voltage of the second battery 5 includes a second buffer circuit 16a. The terminal voltage of the battery 5 is applied to the inputs of an operational amplifier, the output of which is connected via an RC-link 27, to a second comparator unit 18, incorporating an operational amplifier 18a.

The output of the comparator circuit 18a controls a transistor switch 23, which is a control transistor of a transistor switch 29 through which magnetizing current to the generator, through the conductor 8' and the control circuit can be regulated. A controllable reference voltage is supplied through a conductor 19 to the one output of the comparator circuits 17,18 and to the one input of a control circuit incorporating an operational amplifier 21a.

The output of the comparator circuit 18a and the output of the control circuit 21a are both connected to control a transistor circuit 23, which in turn controls a transistor circuit 29 for controlling magnetization of the magnetizing coil via the control circuit not shown.

When the output of the control circuit 21a controls the transistors 23,29 current is supplied to the magnetizing coil of the generator, through transistor 29 and the conductor 8' via a control circuit, meaning that a full charging current or power output is supplied through the conductor 7'. The control circuit senses a voltage which is recognized as being an excessively low terminal voltage at that time. As soon as a signal occurs on the conductor 22 from the comparator circuit 18a, the transistor circuit 29 conducts the whole of said current through the conductor 8', which is recognized by the control circuit as being a high terminal voltage and the level of charging current on the conductor 7' is reduced to a level adapted for maintaining the charge on the battery or to a level adapted for final charging of the battery.

If it is assumed that the first battery 4 is almost fully charged while the second battery 5 is deplete of charge or flat, the full power output will be applied to the first battery. The buffer circuit 15 indicates to the comparator circuit 17 when the voltage across the terminals of the battery 4 equals a pre-determined value, for example 14.2 V, at which the battery is considered to be fully charged. The transistor circuit 14 then conducts current to the second battery 5, whereupon the terminal voltage across the first battery 4 falls, this drop in voltage being sensed by the buffer circuit 15 and the comparator circuit 17 and the transistor circuit 14 is throttled.

This means that when the first battery 14 has a terminal voltage of 14.2 V. the charge is switched to the second battery 5 and a pulsatile charging sequence takes place.

When the second battery 5 registers a terminal voltage of 14.2 V, which is sensed by the second buffer circuit 16 and the second comparator circuit 18, the transistor circuit 23 and 29 begins to conduct, whereupon a control circuit recognizes the terminal voltage as being excessively high and cuts-off the magnetizing current to the generator.

When the comparator circuit 18 does not control the transistor 23 and 29, this control is taken over by the control circuit so as to maintain a constant voltage of 13.5 V on the conductor 8'. This causes the regulator to react when the battery voltage is too low and delivers full magnetizing current to the generator.

The aforecited voltage values are not critical and are merely intended to form a potential which can be recognized by the control circuit as an excessively low terminal voltage or an excessively high terminal voltage, an excessively low terminal voltage resulting in the application of full power output and a high terminal voltage resulting in the application of a low power output or charging current.

The terminal voltage is measured directly on the batteries and thus all voltage drops in the conductors and switching contacts will be compensated equally with a voltage drop in the earth connections.

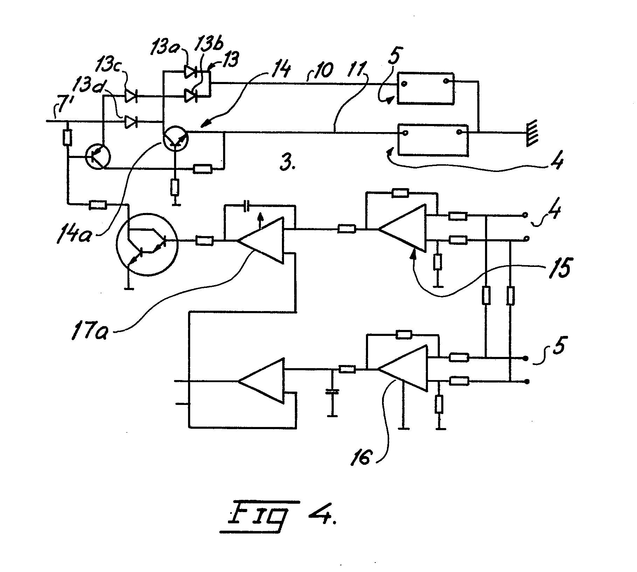

With reference to Figure 4 it is shown an alternative to the arrangement illustrated in the previously described figures 1 to 3.

It can be seen that the essential differences between Figure 4 and Figure 3 resides in the fact that the two diodes have been removed from the diode array 13, that a first battery array 4 is connected through the conductor 11, and that a second battery array 5 is connected through the conductor 10, and that the polarity on the inputs of the comparator circuit 17a has been changed.

The first battery 4 is connected, through the conductor 11, to an active switching circuit 14, comprising a transistor 14a, while the second battery 5 is connected, through the conductor 10, to a passive diode array 13, comprising a diode array having two parallel-connected diodes 13a and 13b and two further parallel-connected diodes 13c and 13d.

The system also includes a parallel-voltage sensing circuit 15 for the second battery 4 and a terminal-voltage sensing circuit 16 for said second battery.

The system according to the invention also includes a circuit which establishes the prevailing charge requirement of a respective battery. In the case of the battery 4 this circuit comprises the circuit 15 and the active switching circuit 14. In the case of the battery 5 the said circuit comprises the circuit 16 and the passive diode array 13. There is also utilized the momentarily occurring voltage drop across the diode circuit and a resistor in the circuit 14 respectively.

18                                    0162030

In accordance with the invention the active switching
circuit 14 is arranged normally to initially adopt. a     .
statein which charging current is supplied to the first
battery and to the second battery 5 simultaneously. Since
the first battery ·4 can be assumed to be practically always
fully charged, the terminal voltage of this battery will
first increase to a pre-determined value, and hence the
circuit 15 is activated and chokes the transistor 14a  of
the circuit 14. When this elevated terminal voltage is
registered on said first battery, the switching circuit 14
is choked so that all charging current is supplied solely
to the second battery 5.

Since charging current initially flows through both the
diode array 13 and conductor 10 to the second battery 5
and through the circuit 14 and conductor 11 to the first
battery 4, the transistor 14a incorporated in the switching
circuit 14 will be fully conductive and therewith produces
a voltage drop which is smaller than the voltage drop
across the diode array. At a pre-determined terminal voltage
value on the first battery 4, which can detected through a
terminal-voltage sensing circuit 15, there is obtained an
increase forward voltage drop in respect of said transistor
14, this increase reducing the charging current and maintaining the set terminal voltage constant.

The forward voltage drop can be permitted to increase until
it is equal to the voltage drop across the diode array (including conductor losses), whereupon all charging current
is supplied to the second battery 5.

When the terminal voltage of the second battery 5 has
increased to a pre-determined level, the circuit 16 is
activated to choke the power output of the charging unit
of controllable output.

It will be understood that the invention is not restricted
to the aforedescribed embodiment and that modifications can
be made within the scope of the following claims.

## CLAIMS

1. A battery charging system including a charging unit having a controllable power output, control means for controlling the power output of the charging unit, and at least two batteries receiving the power output, characterized in that the power output delivered by the charging unit is controlled by the control means for maximum, or near maximum power during the whole of the charging duration; and in that when a high charge is established in the batteries the control means adjusts the power output of the charging unit to a battery-charge maintaining level or to a level adapted for final charging of the battery.

2. A battery charging system according to Claim 1, characterized in that a first supply conductor for supplying charging current to a first battery has an electrical resistance which exceeds the resistance of a second supply conductor for supplying charging current to a second battery.

3. A battery charging system according to Claim 2, characterized in that the resistance differential is created by one or more diodes and is used in a switching circuit.

4. A battery charging system according to Claim 1 or Claim 4, characterized in that a first terminal-voltage sensing circuit is arranged to sense the terminal voltage occurring across the terminals of a first battery, and a second terminal-voltage sensing circuit is arranged to sense the terminal voltage occurring across the terminals of a second battery.

5. A battery charging system according to Claim 1 or Claim 4, characterized in that the control means incorporates a circuit arranged to constantly control charging units to maximum or high power; and in that the effect of said

0162030

circuit on the control means is inhibited when the sensed terminal voltage exceeds pre-determined values, whereupon the charging unit is switched over to its battery-charge maintaining mode or is disconnected.

6. A battery charging system according to Claim 1, characterized in that a first transistor circuit is arranged to control the charging current or power output to the first or the second battery.

7. A battery charging system according to Claim 1, characterized in that the first terminal-voltage sensing circuit includes a first buffer circuit which is connected to a first comparator unit; in that the second terminal-voltage sensing circuit is connected to a second comparator unit via a second buffer circuit; in that a reference voltage, preferably an adjustable reference voltage is applied to the first and the second comparator unit; in that the first comparator unit is arranged to control a first transistor circuit so as to connect the maximum power output either to the first or the second battery; and in that the second comparator unit is adapted to inhibit a signal arriving from a control circuit for maximum charging power and causes a reduction in the power output to a minimum.

8. A battery charging system comprising a charging unit having controllable power output, a control means (3) effective to control the power output of the charging unit, and at least two batteries (4,5) which receive the power output from the charging unit and of which a first battery is connected to an active switching circuit and a second battery is connected to a diode array, characterized in that the switching circuit is arranged initially to adopt a state  in which charging current is supplied to the first battery and to the second battery (5), and in that when an elevated terminal voltage is registered on said first battery the active switching circuit is choked, whereupon charging current is supplied solely to the second battery through said diode array.

9. A battery charging system according to Claim 8, characterized in that a transistor incorporated in the switching circuit is initially fully conductive to produce a voltage drop which is smaller than the voltage drop across the diode array.

10. A battery charging system according to Claim 9, characterized by a terminal-voltage sensing circuit (15) adapted to detect a pre-determined terminal-voltage value on the first battery (4), said circuit (15) producing an increased forward voltage drop on a transistor (14a), this increase maintaining a set terminal voltage on the second battery constant.

11. A battery charging system according to Claim 10, characterized in that the forward voltage drop across the transistor (14a) is permitted to increase until it is equal with the voltage drop across the diode array (including conductor losses), whereupon charging current is supplied solely to the second battery.

Fig 1.

Fig 2.

Fig 3.

2/2

0162030

Fig 4.